# EUROPEAN PATENT APPLICATION

(11) **EP 4 400 948 A1**
(43) Date of publication of application: **17.07.2024**
(21) Application number: 22881214.5
(22) Date of filing: 05.09.2022
(51) Int. Cl.: G06F 3/0346, G06F 1/16, G06F 3/038, G06F 3/14, G06F 9/451

(54) **ELECTRONIC DEVICE FOR IDENTIFYING STATE BY USING SENSOR**

(30) Priority: 14.10.2021 KR 20210137011
(71) Applicant: Samsung Electronics Co., Ltd., Suwon-si, Gyeonggi-do 16677 (KR)
(72) Inventor: JO, Daehyun, Suwon-si, Gyeonggi-do 16677 (KR); KIM, Wooyoung, Suwon-si, Gyeonggi-do 16677 (KR); LEE, Wonhee, Suwon-si, Gyeonggi-do 16677 (KR); CHOI, Heejun, Suwon-si, Gyeonggi-do 16677 (KR)
(74) Representative: Gulde & Partner
(86) International application number: PCT/KR2022/013292
(87) International publication number: WO 2023/063584

(57) **Abstract**

An electronic device, according to one embodiment, may comprise: a first housing including a first surface and a second surface facing the first surface and spaced apart therefrom; a second housing including a third surface and a fourth surface facing the third surface and spaced apart therefrom; a folding housing which pivotably connects a side surface of the first housing and a side surface of the second housing facing the side surface of the first housing; at least one inertial sensor in at least one of the first housing and the second housing; a first display disposed on the first surface and the third surface across the folding housing; a second display disposed on the second surface or the fourth surface; and at least one processor.

## Description

### [Technical Field]

The following descriptions relate to an electronic device for identifying a state by using a sensor.

### [Background Art]

An electronic device may include at least one sensor to identify a state of the electronic device or a state outside the electronic device. For example, the at least one sensor may include at least one inertial sensor used to identify a posture of the electronic device or movement of the electronic device. For example, the at least one sensor may include at least one of an illuminance sensor for identifying brightness around the electronic device or a proximity sensor for identifying whether the electronic device is adjacent to an external object.

### [Disclosure]

### [Technical Solution]

An electronic device is provided. The electronic device may comprise a first housing including a first surface and a second surface facing the first surface. The electronic device may comprise a second housing including a third surface and a fourth surface facing the third surface. The electronic device may comprise a folding housing pivotably connecting a side surface of the first housing to a side surface of the second housing that faces the side surface of the first housing. The electronic device may comprise at least one inertial sensor within at least one of the first housing or the second housing. The electronic device may comprise a first display disposed on the first surface and the third surface across the folding housing. The electronic device may comprise a second display disposed on the second surface or the fourth surface. The electronic device may comprise at least one processor configured. The at least one processor may be configured to, while the second display is disabled in a folding state in which the first surface faces the third surface, obtain, through the at least one inertial sensor, first data indicating a posture of the electronic device and second data indicating a movement state of the electronic device. The at least one processor may be configured to change, based on a reception of a touch input on the enabled second display, a time duration in which the second display is enabled in accordance with the specified event, based on detecting a specified event while identifying the electronic device being moved in a specified posture based on the first data and the second data. The at least one processor may be configured to maintain the time duration, independently from a reception of the touch input, based on detecting the specified event while identifying the electronic device being moved in a posture different from the specified posture based on the first data and the second data.

An electronic device is provided. The electronic device may include a display. The electronic device may include a proximity sensor included in the display or disposed under the display. The electronic device may include at least one processor. The at least one processor may be configured to detect an event for enabling the display. The at least one processor may be configured to obtain data indicating a state around the electronic device through the proximity sensor, in response to detecting the event. The at least one processor may be configured to identify the electronic device being in a first state in which the electronic device is included in an external object in a ungripped state, based on identifying the data being within a first reference range. The at least one processor may be configured to identify the electronic device being in a second state different from the first state, based on identifying the data being within a second reference range different from the first reference range. The at least one processor may be configured to identify a first difference between a representative value of first values within the first reference range and the data and a second difference between a representative value of second values within the second reference range and the data, based on identifying that the data is out of the first reference range and the second reference range; and identify whether the electronic device is in the first state or the second state, based on the first difference and the second difference. The at least one processor may be configured to display a first screen through the display enabled in accordance with the event, based on identifying that the electronic device is in the first state. The at least one processor may be configured to display a second screen through the display enabled in accordance with the event, based on identifying that the electronic device is in the second state.

### [Description of the Drawings]

FIG. 1 is a block diagram of an electronic device in a network environment according to various embodiments.
FIG. 2 is a simplified block diagram of an electronic device according to various embodiments.
FIG. 3 is a flowchart illustrating a method of identifying a state of an electronic device based on data obtained through an inertial sensor according to an embodiment.
FIG. 4 illustrates an example of an unfolding state of an electronic device according to an embodiment.
FIG. 5 illustrates an example of a folding state of an electronic device according to an embodiment.
FIG. 6 illustrates an example of a specified state indicated by first data obtained according to an embodiment.
FIG. 7 illustrates an example of a movement state of an electronic device indicated by second data obtained according to an embodiment.
FIG. 8A illustrates an example of a method of identifying whether an electronic device is included in an external object in a ungripped state based on first data and second data, according to an embodiment.
FIG. 8B is a timing diagram illustrating a method of controlling a time duration in which a second display 250 is enabled in accordance with a specified event.
FIG. 9 is a flowchart illustrating a method of obtaining first data, according to an embodiment.
FIG. 10 is a flowchart illustrating a method of identifying a state of an electronic device by using different sensors according to whether the electronic device is in a folding state, according to an embodiment.
FIG. 11 is a flowchart illustrating a method of identifying a state of an electronic device by using a proximity sensor based on identifying an unfolding state, according to an embodiment.
FIG. 12 is a flowchart illustrating a method of identifying a state of an electronic device by using a first processor while a second processor is disabled, according to an embodiment.
FIG. 13 is a flowchart illustrating a method of identifying a state of an electronic device based on data obtained through a proximity sensor, according to an embodiment.
FIG. 14 illustrates an example of a screen including a visual object displayed based on identifying that an electronic device is included in an external object in a ungripped state, according to an embodiment.
FIG. 15 is a flowchart illustrating a method of adjusting a first reference range and a second reference range, according to an embodiment.
FIG. 16 illustrates an example of a method of adjusting a representative value of first values within a first reference range and a representative value of second values within a second reference range, according to an embodiment.
FIG. 17 illustrates an example of a method of dividing a first reference range into a first partial reference range and a second partial reference range, according to an embodiment.

### [Mode for Invention]

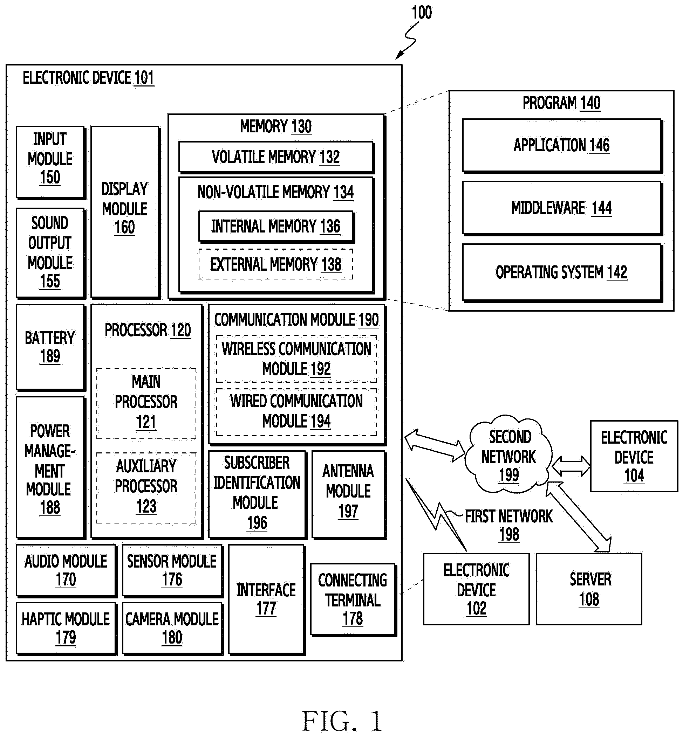

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adj acent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

An electronic device with portability may be located in various environments. For example, the electronic device may be located in a pocket of pants or jumper, or may be located in a bag. Although the electronic device located in the pocket or the bag is in a state incapable of receiving a user input, a touch input on a display of the electronic device may be caused by an unintended impact. Since feedback on the touch input is an operation of the electronic device not intended by the user, a method for identifying whether the electronic device is located in the pocket or the bag may be required.

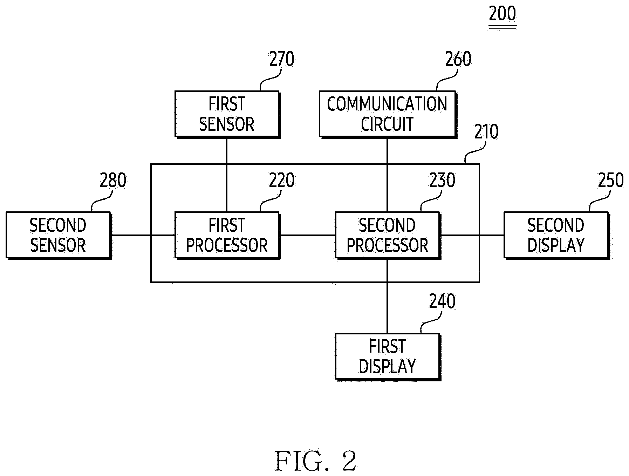

FIG. 2 is a simplified block diagram of an electronic device according to various embodiments. The electronic device may be the electronic device 101 illustrated in FIG. 1.

Referring to FIG. 2, an electronic device 200 (e.g., the electronic device 101) may include a processor 210 including a first processor 220 and a second processor 230, a first display 240, a second display 250, a communication circuit 260, a first sensor 270, and a second sensor 280.

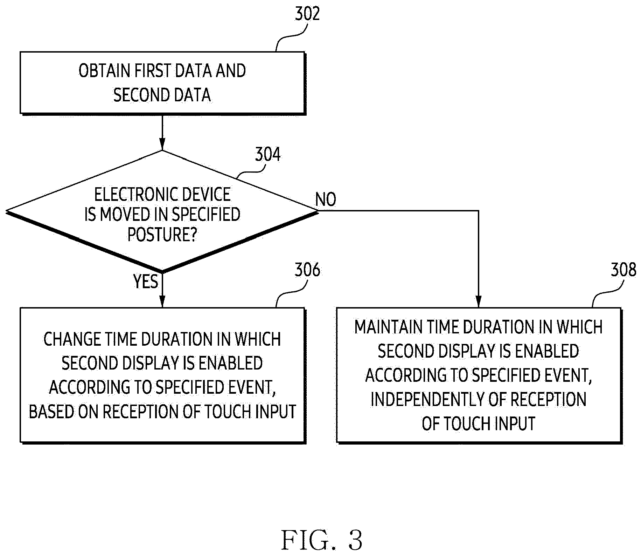

In an embodiment, the processor 210 may be configured to execute operations of the electronic device 200 described later through description of FIGS. 3 to 17.

In an embodiment, the first processor 220 in the processor 210 may include the auxiliary processor 123 illustrated in FIG. 1. For example, the first processor 220 may include the sensor hub processor exemplified through the description of FIG. 1. For example, the first processor 220 may be operably coupled to each of the first sensor 270 and the second sensor 280.

In an embodiment, the second processor 230 in the processor 210 may include the main processor 121 illustrated in FIG. 1. For example, the second processor 230 may be operably coupled to each of the first display 240, the second display 250, and the communication circuit 260.

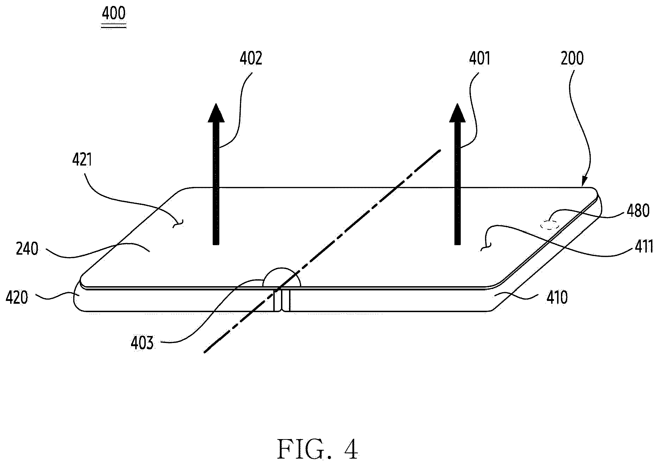

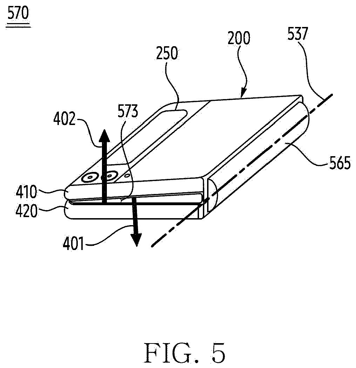

In an embodiment, the first display 240 may include the display module 160 illustrated in FIG. 1. In an embodiment, the first display 240 may be a flexible display. The first display 240, which is the flexible display, may have a plurality of states, as will be described later through description of FIGS. 4 and 5.

In an embodiment, the second display 250 may be a display exposed through a second surface different from a first surface of the housing of the electronic device 200 to which the first display 240 is exposed. The second display 250 exposed through the second surface will be described later with reference to FIG. 5. According to an embodiment, the second display 250 may not be included in the electronic device 200.

In an embodiment, the communication circuit 260 may include the communication module 190 illustrated in FIG. 1.

In an embodiment, the first sensor 270 may include a part of the sensor module 176 illustrated in FIG. 1. For example, the first sensor 270 may be used to identify a change in a position of the electronic device 200. For example, the first sensor 270 may be used to identify a movement state of the electronic device 200 or a change in the movement state. The first sensor 270 may be used to identify a posture of the electronic device 200 or a change in the posture of the electronic device 200. The first sensor 270 may include at least one of an acceleration sensor and a gyro sensor.

In an embodiment, the second sensor 280 may include a part of the sensor module 176 illustrated in FIG. 1. For example, the second sensor 280 may be used to identify a state around the electronic device 200. The second sensor 280 may be used to identify a grip state of the electronic device 200. For example, the second sensor 280 may include at least one of an illuminance sensor and a proximity sensor.

FIG. 3 is a flowchart illustrating a method of identifying a state of an electronic device based on data obtained through an inertial sensor according to an embodiment. This method may be executed by the electronic device 101 illustrated in FIG. 1, the processor 120 illustrated in FIG. 1, the electronic device 200 illustrated in FIG. 2, or the processor 210 illustrated in FIG. 2.

FIG. 4 illustrates an example of an unfolding state of an electronic device according to an embodiment.

FIG. 5 illustrates an example of a folding state of an electronic device according to an embodiment.

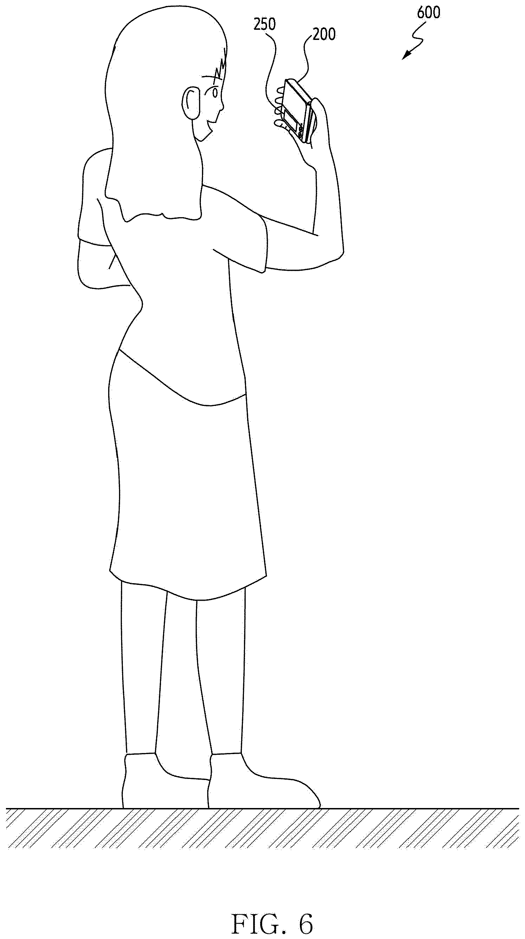

FIG. 6 illustrates an example of a specified state indicated by first data obtained according to an embodiment.

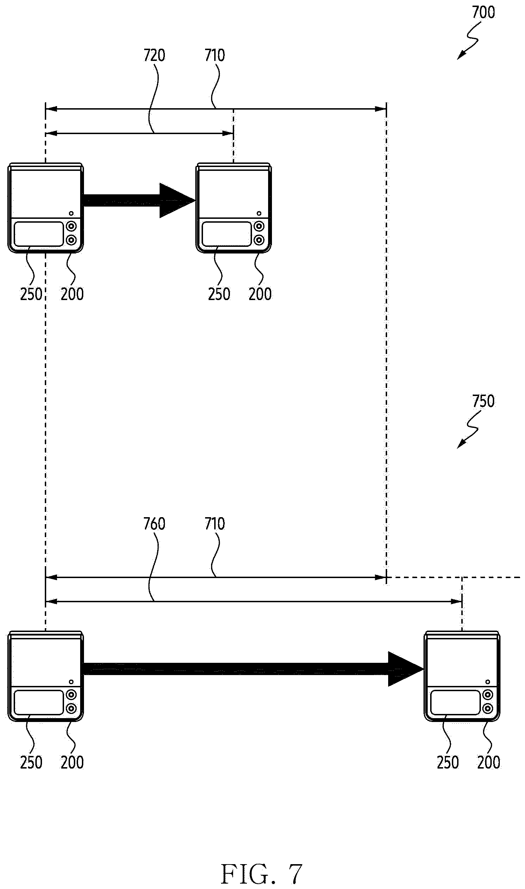

FIG. 7 illustrates an example of a movement state of an electronic device indicated by second data obtained according to an embodiment.

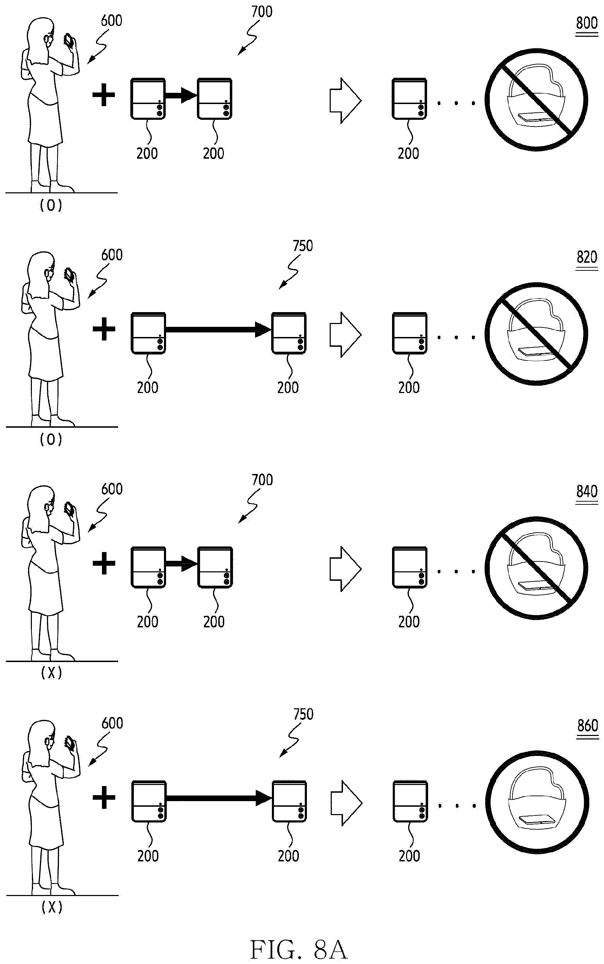

FIG. 8A illustrates an example of a method of identifying whether an electronic device is included in an external object in a ungripped state based on first data and second data, according to an embodiment.

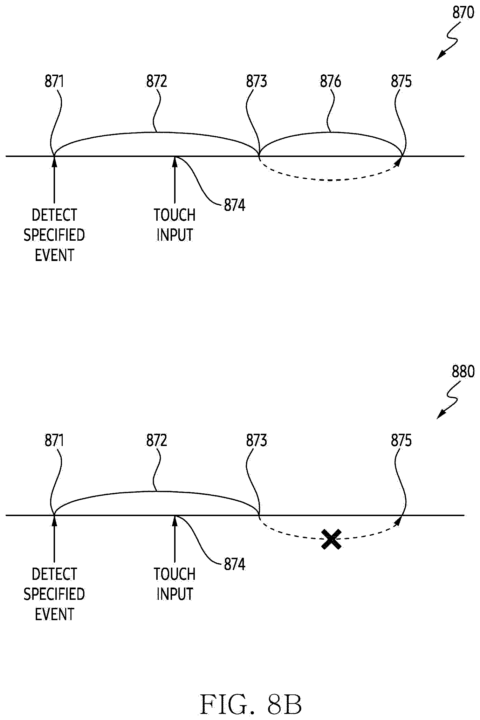

FIG. 8B is a timing diagram illustrating a method of controlling a time duration in which a second display 250 is enabled in accordance with a specified event.

Referring to FIG. 3, in operation 302, the processor 210 may obtain first data indicating a posture of the electronic device 200 and second data indicating a movement state of the electronic device 200 through the first sensor 270, while the second display 250 is disabled. In an embodiment, disabling of the second display 250 may mean a state in which the second display 250 provides a black image within the entire display area of the display 250. In an embodiment, disabling of the second display 250 may mean a state in which power is not provided to all pixels in the second display 250 for displaying an image. In an embodiment, disabling of the second display 250 may mean a state in which an always on display (AOD) mode is provided through the second display 250. For example, the AOD mode may be a mode in which a display driving circuit in the second display 250 displays an image in at least a portion of a display area of the second display 250 while the second processor 230 is disabled. The second processor 230 may be enabled in a portion of a time interval in which the AOD mode is provided. For example, the second processor 230 may be enabled, in response to detecting an event while the AOD mode is provided. The second processor 230 enabled while the AOD mode is provided may obtain an image provided within the AOD mode based on the event, and disabled again in response to providing the obtained image to the display driving circuit.

In an embodiment, the processor 210 may obtain the first data and the second data, while the electronic device 200 is in a folding state and the second display 250 is disabled. In an embodiment, the electronic device 200 may be a foldable electronic device including the first display 240, which is a flexible display capable of being folded based on a folding axis.

The electronic device 200, which is the foldable electronic device, may provide various states through the first display 240. For example, the electronic device 200 may provide an unfolding state and the folding state.

For example, referring to FIG. 4, the electronic device 200 may be in a state 400 in which a first housing 410 and a second housing 420 are fully folded out by a folding housing (a folding housing 565 illustrated in FIG. 5). In an embodiment, the state 400 may mean a state in which a first direction 401 in which a first surface 411 of the first housing 410 faces corresponds to a second direction 402 in which a second surface 421 of the second housing 420 faces. For example, in the state 400, the first direction 401 may be parallel to the second direction 402. For example, in the state 400, the first direction 401 may be the same as the second direction 402. In an embodiment, in the state 400, the first surface 411 and the second surface 421 may substantially form one flat surface. In an embodiment, an angle 403 between the first surface 411 and the second surface 421 in the state 400 may be 180 degrees. In an embodiment, the state 400 may mean a state in which the entire display area of the first display 240 may be substantially provided on one flat surface. For example, in the state 400, a display area of the first display 240 may not include a curved surface. The unfolding state may be referred to as an outspread state (or an outspreading state). In an embodiment, the display area of the first display 240 may include the second sensor 280. For example, the second sensor 280 may be disposed under an area 480 within the display 240 corresponding to the first surface 411 of the first housing 410. However, it is not limited thereto.

For example, referring to FIG. 5, the electronic device 101 may provide a state 570, which is the folding state, in which the first housing 410 and the second housing 420 are folded in by the folding housing 565. In an embodiment, the folding state including the state 570 may mean a state in which the first direction 401 in which the first surface 411 (not shown in FIG. 5) faces is distinguished from the second direction 402 in which the second surface 421 (not shown in FIG. 5) faces. For example, in the state 570, the angle between the first direction 401 and the second direction 402 is substantially 180 degrees, and the first direction 401 and the second direction 402 may be distinguished from each other. For example, in the state 570, an angle 573 between the first surface 411 and the second surface 421 may be substantially 0 degree. The folding state may be referred to as a folded state. For example, as the first surface 411 and the second surface 421 face each other by the folding housing 565, the electronic device 200 may provide the state 570 in which a display area of the first display 240 corresponding to the first surface 411 is substantially fully superimposed on a display area of the first display 240 corresponding to the second surface 421. For example, the electronic device 200 may provide the state 570 in which the first direction 401 is substantially opposite to the second direction 402. For another example, the state 570 may mean a state in which a display area of the first display 240 is covered, within a user's field of view looking at the electronic device 200. However, it is not limited thereto.

In an embodiment, the first display 240 may be bent by rotation provided through the folding housing 565. For example, in the state 570, a portion of the display area of the first display 240 may be bent. For example, the portion of the display area of the first display 240 may be in a curvedly bend state to prevent damage to the first display 240 within the folding state. However, it is not limited thereto.

For example, the processor 210 may identify the angle between the first direction 401 in which the first surface 411 of the first housing 410 faces and the second direction 402 in which the second surface 421 of the second housing 420 faces, through at least one of a hall sensor in the electronic device 200, the first sensor 270 in the electronic device 200, a rotation sensor in the folding housing 565, a stretch sensor in the electronic device 200, or the second sensor 280 in the electronic device 200.

Meanwhile, in an embodiment, the first housing 410 may include the second display 250 on a second surface 590 facing the first surface 411. For example, the second display 250 may be used to provide visual information within the folding state in which the display area of the first display 240 is not visible.

Referring back to FIG. 3, in an embodiment, the first data obtained while the second display 250 is disabled within the folding state may be obtained based on acceleration vectors (or acceleration values) obtained from the first sensor 270. In an embodiment, the second data obtained while the second display 250 is disabled within the folding state may be obtained based on the acceleration vectors (or the acceleration values) obtained from the first sensor 270.

In operation 304, the processor 210 may identify whether the electronic device 200 is moved in a specified posture, based on the first data and the second data obtained while the second display 250 is disabled within the folding state. For example, operation 304 may be executed to identify whether the electronic device 200 is included in an external object in a ungripped state.

In an embodiment, the specified posture may mean a posture of the electronic device 200 when a user of the electronic device 200 looks at the second display 250. In an embodiment, the specified posture may mean a posture of the electronic device 200 when the user of the electronic device 200 causes a user input with respect to the second display 250. In an embodiment, the specified posture may mean a posture in which an orientation of the electronic device 200 with respect to a direction of an acceleration of gravity is within a specified range.

For example, referring to FIG. 6, the specified posture may mean a posture of the electronic device 200 when the user of the electronic device 200 looks at the second display 250 as in the state 600. For example, since the electronic device 200 having a posture different from the specified posture means that the electronic device 200 is within a state, which is not used by the user and included in the external object (e.g., pocket or bag) or is in a state incapable of receiving a user input through the second display 250, in operation 304, the processor 210 may identify whether the electronic device 200 has the specified posture, such as in the state 600. For example, the first data may indicate that the electronic device 200 has the specified posture, such as the state 600, or indicate that the electronic device 200 has a posture distinct from the specified posture, such as the state 600.

Referring back to FIG. 3, in an embodiment, in operation 304, the processor 210 may identify a movement state of the electronic device 200. For example, the processor 210 may identify whether the electronic device 200 is moved in a state carried by a walking user based on the second data. For example, the processor 210 may identify whether the electronic device 200 is moved by a specified distance or more based on the second data. For example, referring to FIG. 7, as in state 700, a change 720 in a position of the electronic device 200 (e.g., the electronic device 200 in a state carried by a walking user), indicated by the second data may be less than a specified distance 710. The processor 210 may process a movement state of the electronic device 200 in a state in which the electronic device 200 is not moved, based on the second data indicating that the change 720 is less than the specified distance 710. For another example, as in state 750, a change 760 in a position of the electronic device 200, indicated by the second data may be greater than or equal to the specified distance 710. The processor 210 may process the movement state of the electronic device 200 in a state in which the electronic device 200 is moved, based on the second data indicating that the change 760 is greater than or equal to the specified distance 710. According to an embodiment, the second data may indicate the number of steps of a user carrying the electronic device 200. When the second data indicates the number of steps, the processor 210 may identify the movement state of the electronic device 200 through a comparison between the reference number of steps and the number of steps indicated by the second data.

Referring back to FIG. 3, the processor 210 may identify whether the electronic device 200 is included in the external object in a ungripped state, by identifying whether the electronic device 200 is moved in the specified posture based on the first data and the second data. For example, referring to FIG. 8A, as in state 800, on a condition that a posture of the electronic device 200 is the specified posture and the electronic device 200 is moved less than the specified distance, the processor 210 may process or recognize a state of the electronic device 200 as a second state different from a first state in which the electronic device 200 is included in the external object (e.g., bag or pocket) in the ungripped state. For example, the electronic device 200 having the specified posture and a movement distance of the electronic device 200 being less than the specified distance may mean that the user of the electronic device 200 is looking at the second display 250 in place, so that the processor 210 may process or recognize the state of the electronic device 200 as the second state. For another example, as in state 820, on a condition that a posture of the electronic device 200 is the specified posture and the electronic device 200 is moved by the specified distance or more, the processor 210 may process or recognize a state of the electronic device 200 as the second state. For example, the electronic device 200 having the specified posture and the movement distance of the electronic device 200 being greater than or equal to the specified distance may mean that the user of the electronic device 200 is looking at the second display 250 while moving, so that the processor 210 may process or recognize a state of the electronic device 200 as the second state. For another example, as in state 840, on a condition that a posture of the electronic device 200 is different from the specified posture and the electronic device 200 is moved less than the specified distance, the processor 210 may process or recognize a state of the electronic device 200 as the second state. For example, the electronic device 200 having a posture different from the specified posture and a movement distance of the electronic device 200 being less than the specified distance may mean that the user of the electronic device 200 is not looking at the second display 250 in place, so that the processor 210 may process or recognize the state of the electronic device 200 as the second state. For still another example, as in state 860, on a condition that a posture of the electronic device 200 is different from the specified posture and the electronic device 200 is moved by the specified distance or more, the processor 210 may process or recognize a state of the electronic device 200 as the first state. For example, the electronic device 200 having a posture different from the specified posture and a movement distance of the electronic device 200 being greater than or equal to the specified distance may mean that the user of the electronic device 200 is moving while carrying the electronic device 200 in the external object (e.g., pocket or bag), so that the processor 210 may process or recognize a state of the electronic device 200 as the first state.

Referring back to FIG. 3, the processor 210 may execute operation 306 on a condition that the electronic device 200 is moved in the specified posture, otherwise may execute operation 308. For example, the processor 210 may execute operation 306 based at least in part on identifying that the electronic device 200 is moved in the specified posture based on the first data and the second data, and operation 308 based at least in part on identifying that the electronic device 200 is moved in a posture different from the specified posture based on the first data and the second data.

In operation 306, based on identifying that the electronic device 200 is moved in the specified posture, the processor 210 may change a time duration in which the second display 250 is enabled in accordance with a specified event based on a reception of a touch input on the second display 250. For example, the processor 210 may change a time duration in which the second display 250 is enabled in accordance with the specified event based on a reception of a touch input on the second display 250, based on detecting the specified event while identifying the electronic device 200 being moved in the specified posture based on the first data and the second data. For example, the specified event may include at least one of receiving a specified touch input (e.g., a double tap input on the disabled second display 250) on the disabled second display 250, receiving a depression input on a physical button exposed through a portion of the first housing 410 or the second housing 420, or receiving a message or signal from an external electronic device, as an event for enabling the second display 250. However, it is not limited thereto.

In an embodiment, the second display 250 may be enabled for a predefined time duration according to the specified event. For example, the second display 250 may be enabled during the predefined time duration and then disabled, in order to reduce power consumption caused by enabling of the second display 250.

For example, since a touch input received in a state that the electronic device 200 has the specified posture while the second display 250 is enabled may be a touch input received according to the user's intention of the electronic device 200, the processor 210 may change a time duration in which the second display 250 is enabled, based on receiving the touch input on the second display 250 before the predefined time duration elapses from a timing when the second display 250 is enabled. For example, referring to FIG. 8B, as in a timing diagram 870, the processor 210 may enable the second display 250 in response to detecting the specified event at timing 871. When the touch input is not received on the second display 250, enabling of the second display 250 may be ceased at a timing 873 when a predefined time duration 872 has elapsed from the timing 871. When the touch input on the second display 250 is received at a timing 874 before the predefined time duration 872 elapses from the timing 871, the processor 210 may change a timing of ceasing enabling of the second display 250 from the timing 873 to a timing 875. For example, the processor 210 may delay a timing of ceasing enabling of the second display 250 to the timing 875 based on the touch input at the timing 871. For example, a time duration 876 between the timing 873 and the timing 875 may be predefined.

Referring back to FIG. 3, in operation 308, based on identifying that the electronic device 200 is not moved in the specified posture, the processor 2110 may maintain a time duration in which the second display 250 is enabled according to the specified event, independently of the reception of the touch input on the second display 250. For example, based on detecting the specified event while identifying that the electronic device 200 is moved in a posture different from the specified posture based on the first data and the second data, the processor 210 may maintain a time duration in which the second display 250 is enabled according to the specified event independently of the reception of the touch input on the second display 250.

For example, since the electronic device 200 having a posture different from the specified posture means that the electronic device 200 is included in the external object in ungripped state, a touch input received in a state that the electronic device 200 has a posture different from the specified posture while the second display 250 is enabled may be a touch input unintended by the user. Since the touch input received while the second display 250 is enabled in a state in which the electronic device 200 has a posture different from the specified posture is a touch input unintended by the user, the processor 210 may ignore the touch input and maintain the time duration in which the second display 250 is enabled. For example, referring to FIG. 8B, as in a timing diagram 880, the processor 210 may enable the second display 250 in response to detecting the specified event at the timing 871. The processor 210 may receive the touch input on the second display 250 at the timing 874 before the predefined time duration 872 elapses from the timing 871. The processor 210 may ignore the touch input received at the timing 874 and cease enabling the second display 250 at the timing 873.

Meanwhile, although not illustrated in FIG. 3, in an embodiment, the processor 210 may change the time duration in which the second display 250 is enabled according to the specified event based on the reception of the touch input, as in operation 306, based on detecting the specified event while identifying that a position of the electronic device 200 having the specified posture is maintained based on the first data and the second data, and change the time duration in which the second display 250 is enabled according to the specified event based on the reception of the touch input, as in operation 306, based on detecting the specified event while identifying that the position of the electronic device 200 having the posture different from the specified posture is maintained based on the first data and the second data.

As described above, the electronic device 200 may identify whether the electronic device 200 is included in an external object in ungripped state, based on data on a posture of the electronic device 200 obtained through the first sensor 270 and data on a movement state of the electronic device 200. For example, the electronic device 200 may identify whether the electronic device 200 is included in the external object in ungripped state through the first sensor 270, while the second sensor 280 is disabled. For example, the electronic device 200 may prevent an operation of the electronic device 200 in accordance with an unintended touch input, which is caused by identifying whether the electronic device 200 is included in the external object in ungripped state by using a touch sensor included in the second display 250 or a touch sensor operably coupled to the second display 250. For example, the electronic device 200 may secure a mounting space around the second display 250, by replacing an operation executed through the second sensor 280 with an operation executed through the first sensor 270 in the folding state. For example, since the electronic device 200 does not require the second sensor 280 to be mounted around the second display 250, another component may be mounted around the second display 250. For example, since the electronic device 200 maintains a time duration in which the second display 250 is enabled on a condition that the electronic device 200 is included in an external object in ungripped state independently of the reception of the touch input, the electronic device 200 may reduce the time duration in which the second display 250 is enabled. For example, the electronic device 200 may reduce power consumption caused by enabling of the second display 250.

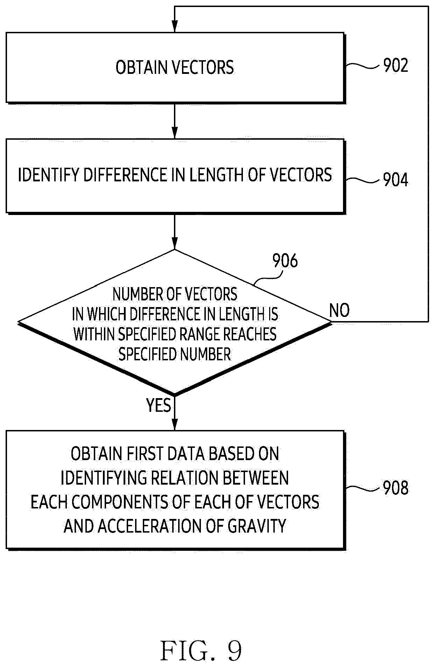

FIG. 9 is a flowchart illustrating a method of obtaining first data, according to an embodiment. This method may be executed by the electronic device 101 illustrated in FIG. 1, the processor 120 illustrated in FIG. 1, the electronic device 200 illustrated in FIG. 2, or the processor 210 illustrated in FIG. 2.

Operations 902 to 908 of FIG. 9 may be related to operation 302 of FIG. 3.

Referring to FIG. 9, in operation 902, the processor 210 may obtain vectors related to acceleration of the electronic device 200 through the first sensor 270 while the second display 250 is disabled.

In operation 904, the processor 210 may identify difference in length of the vectors. For example, the processor 210 may identify a norm of each of the vectors as a length of each of the vectors. The processor 210 may identify difference in length of the vectors, based on the identified length.

In operation 906, the processor 210 may identify whether the number of vectors in which the difference in length is within a specified range reaches a specified number. For example, since the difference in length being within the specified range may mean that a representative posture of the electronic device 200 may be derived from postures of the electronic device 200 identified respectively based on the vectors and the number reaching the specified number may mean that the reliability of the representative posture is guaranteed (or ensured), the processor 210 may identify whether the number reaches the specified number. The processor 210 may execute operation 908 on a condition that the number reaches the specified number, otherwise execute operations 902 to 906 again.

In operation 908, based on identifying that the number reaches the specified number, the processor 210 may obtain the first data based on identifying a relation between each components of each of the vectors and acceleration of gravity. For example, the processor 210 may identify a relation between each of an x-axis component, a y-axis component, and a z-axis component of each of the vectors and the acceleration of gravity, and obtain the first data based on the identified relation. For example, the relation may be represented as a ratio between each of magnitude of the x-axis component, magnitude of the y-axis component, and magnitude of the z-axis component of each of the vectors and magnitude of the acceleration of gravity. However, it is not limited thereto.

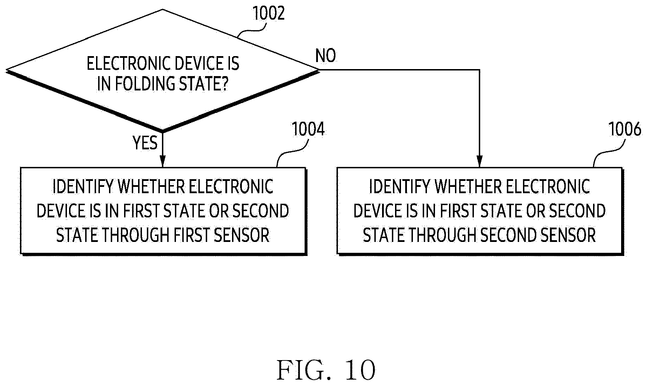

FIG. 10 is a flowchart illustrating a method of identifying a state of an electronic device by using different sensors according to whether the electronic device is in a folding state, according to an embodiment. This method may be executed by the electronic device 101 illustrated in FIG. 1, the processor 120 illustrated in FIG. 1, the electronic device 200 illustrated in FIG. 2, or the processor 210 illustrated in FIG. 2.

Operation 1004 of FIG. 10 may be related to operations 302 to 308 of FIG. 3.

Referring to FIG. 10, in operation 1002, the processor 210 may identify whether the electronic device 200 is in the folding state. For example, the processor 210 may identify whether the electronic device 200 is in the folding state, by identifying an angle between the first direction 401 in which the first surface 411 of the first housing 410 faces and the second direction 402 in which the second surface 421 of the second housing 420 faces, through at least one of the hall sensor in the electronic device 200, the first sensor 270 in the electronic device 200, the rotation sensor in the folding housing 565, the stretch sensor in the electronic device 200, or the second sensor 280 in the electronic device 200. However, it is not limited thereto. The processor 210 may execute operation 1004 on a condition that the electronic device 200 is in the folding state, otherwise execute operation 1006.

In operation 1004, the processor 210 may identify whether the electronic device 200 is in the first state or the second state through the first sensor 270, based on identifying that the electronic device 200 is in the folding state. For example, the processor 210 may execute operations 302 to 304 to identify whether the electronic device 200 is in the first state or the second state.

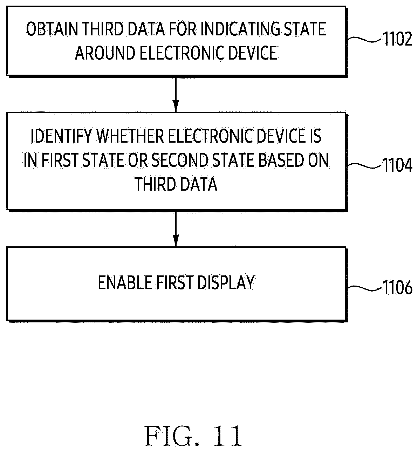

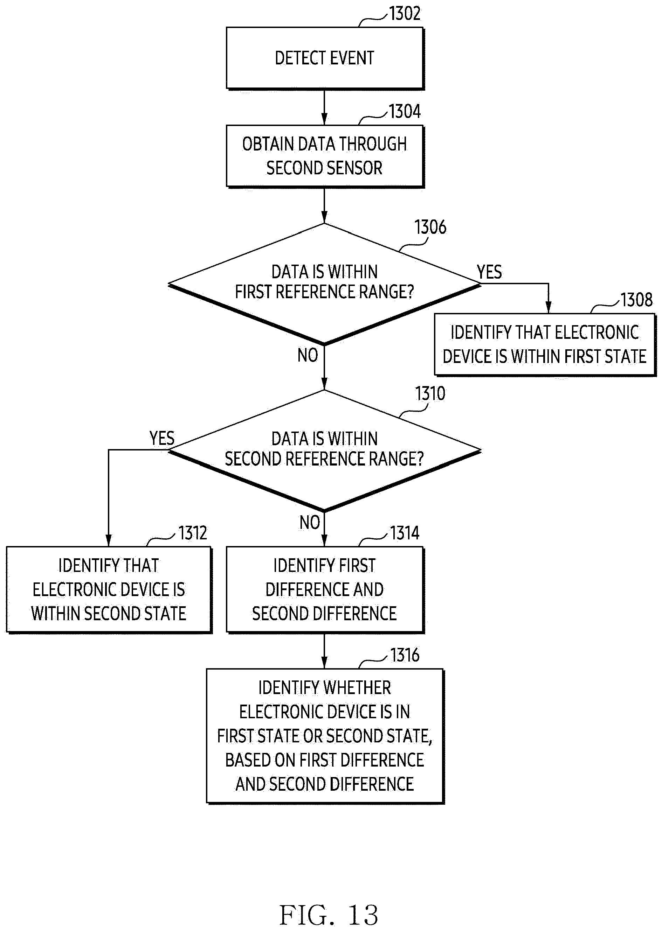

In operation 1006, the processor 210 may identify whether the electronic device 200 is in the first state or the second state through the second sensor 280, based on identifying that the electronic device 200 is not in the folding state. For example, referring to FIGS. 4 and 5, since the second sensor 280 is exposed in state 400, unlike state 570, the processor 210 may identify whether the electronic device 200 is in the first state or the second state, through the second sensor 280 among the first sensor 270 and the second sensor 280. In an embodiment, the processor 210 may identify whether the electronic device 200 is in the first state or the second state through both the first sensor 270 and the second sensor 280, in order to enhance reliability. In an embodiment, the processor 210 may execute operation 1006 through operations illustrated through description of FIG. 11 or description of FIGS. 13 to 17. However, it is not limited thereto.

As described above, the electronic device 200 may adaptively change a sensor used for identifying whether the electronic device 200 is in the first state or the second state, according to whether the electronic device 200 is in the folding state. Through this sensor change, the electronic device 200 may prevent or minimize a decrease in the reliability of identifying the state of the electronic device 200 according to whether the second sensor 280 is exposed.

FIG. 11 is a flowchart illustrating a method of identifying a state of an electronic device by using a proximity sensor based on identifying an unfolding state, according to an embodiment. This method may be executed by the electronic device 101 illustrated in FIG. 1, the processor 120 illustrated in FIG. 1, the electronic device 200 illustrated in FIG. 2, or the processor 210 illustrated in FIG. 2.

Operations 1102 to 1106 of FIG. 11 may be related to operation 1006 of FIG. 10.

Referring to FIG. 11, in operation 1102, the processor 210 may obtain third data for indicating a state around the electronic device 200 while the electronic device 200 is in the unfolding state, through the second sensor 280. For example, the third data may include a value for brightness around the electronic device 200. For example, the third data may include a value for a distance between the electronic device 200 and an external object. However, it is not limited thereto. For example, the processor 210 may obtain the third data through the second sensor 280, based on identifying a specified event for enabling the first display 240 while the electronic device 200 is in the unfolding state.

In operation 1104, the processor 210 may identify whether the electronic device 200 is in the first state or the second state based on the third data.

For example, the processor 210 may identify first difference between the third data and first reference data indicating the first state and second difference between the third data and second reference data indicating the second state. For example, the first reference data may be a set of at least one value estimated to indicate the first state among values obtained through the second sensor 280. For example, the at least one value configuring the first reference data may be included within a first reference range. For example, the second reference data may be a set of at least one value estimated to indicate the second state among values obtained through the second sensor 280. For example, the at least one value configuring the second reference data may be included within a second reference range. For example, the processor 210 may identify the first difference by comparing the third data with a representative value of the at least one value in the first reference data. For example, the processor 210 may identify the second difference by comparing the third data with a representative value of the at least one value in the second reference data. However, it is not limited thereto. The processor 210 may identify whether the electronic device 200 is in the first state or the second state, based on the first difference and the second difference.

In operation 1106, the processor 210 may enable the first display 240 after obtaining the third data. For example, the third data may be obtained while the first display 240 is disabled. For example, since infrared rays emitted from the second sensor 280 for obtaining the third data may reduce visibility of an image (or screen) displayed through the first display 240 enabled according to the specified event, the processor 210 may enable the first display 240 after obtaining the third data. For example, the processor 210 may cease obtaining the third data before enabling the first display 240 or after enabling the first display 240 (or immediately after enabling).

Meanwhile, in an embodiment, at least one of the first reference data and the second reference data may be updated or refined based on data obtained through the second sensor 280. For example, at least one of the first reference data and the second reference data may be updated, refined, or adjusted based on the third data.

In an embodiment, a weight may be applied to data obtained through the second sensor 280, in order to update the first reference data and the second reference data. The weight may be set differently according to a context in which data is obtained through the second sensor 280.

For example, when fourth data is obtained through the second sensor 280 in context of providing a call with a user of an external electronic device through a call application installed in the electronic device 200, the processor 210 may recognize whether a state of the electronic device 200 when obtaining the fourth data is the first state or the second state based on the context. For example, reliability of updating the first reference data and the second reference data based on the fourth data obtained within a state in which the context is recognized may be higher than reliability of updating the first reference data and the second reference data based on the third data obtained within a state in which the context is not recognized. In order to reflect this difference in reliability, the processor 210 may set a weight applied to the fourth data when updating the first reference data and the second reference data to be greater than a weight applied to the third data when updating the first reference data and the second reference data. However, it is not limited thereto.

For another example, the processor 210 may display a visual object for guiding that a reception of a touch input on the first display 240 is restricted, through the first display 240, based on identifying that the electronic device 200 is within the first state based on the third data. After displaying the visual object, the processor 210 may receive a user input for ceasing a display of the visual object. Since receiving the user input means that a state of the electronic device 200 is not the first state but the second state, the processor 210 may update the first reference data and the second reference data based on the reception of the user input. However, it is not limited thereto.

As described above, the electronic device 200 may identify whether a state of the electronic device 200 is the first state or the second state, based on classifying data obtained through the second sensor 280 based on the first reference data and the second reference data. Since each of the first reference data and the second reference data is not fixed data but statistical data to be updated based on data obtained through the second sensor 280, the electronic device 200 may prevent or minimize a decrease in performance of identifying a state of the electronic device 200 even when a change in a state of the second sensor 280 occurs or a change in an external environment affecting the second sensor 280 occurs.

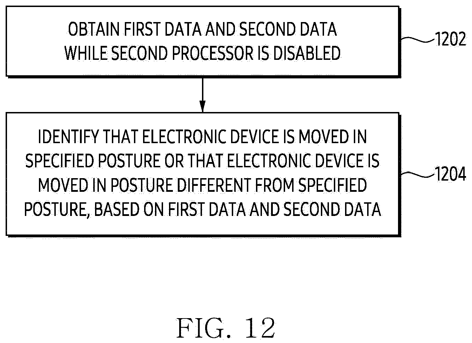

FIG. 12 is a flowchart illustrating a method of identifying a state of an electronic device by using a first processor while a second processor is disabled, according to an embodiment. This method may be executed by the first processor 220 illustrated in FIG. 2.

Operations 1202 and 1204 of FIG. 12 may be related to operations 302 and 304 of FIG. 3.

Referring to FIG. 12, in operation 1202, the first processor 220 may obtain the first data and the second data through the first sensor 270 while the second processor 230 is disabled. For example, the second processor 230 may be disabled within a portion of a section in which a user input is not received, in order to reduce power consumption by the operation of the second processor 230. In an embodiment, the first processor 220 may obtain the first data and the second data through the first sensor 270 while the second processor 230 is disabled and the second display 250 is disabled in the folding state.

In operation 1204, the first processor 220 may identify that the electronic device 200 is moved in the specified posture or that the electronic device 200 is moved in a posture different from the specified posture, based on the first data and the second data. Meanwhile, the second processor 230 may be disabled while operation 1204 is executed.

In an embodiment, the second processor 230 may be enabled based on detecting the specified event for enabling the second display 250, as in operation 306. For example, while the second processor 230 is disabled, the communication processor exemplified through the description of FIG. 1 may receive a signal or message related to the specified event from an external electronic device through the communication circuit 260. The communication processor may provide the second processor 230 with a signal for enabling the second processor 230, in response to receiving the signal or the message. The second processor 230 enabled based on the signal obtained from the communication processor may enable the second display 250. The second processor 230 may execute operation 306 or operation 308 according to operation 1204 executed by the first processor 220, after enabling the second display 250.

FIG. 13 is a flowchart illustrating a method of identifying a state of an electronic device based on data obtained through a proximity sensor, according to an embodiment. This method may be executed by the electronic device 101 illustrated in FIG. 1, the processor 120 illustrated in FIG. 1, the electronic device 200 illustrated in FIG. 2, or the processor 210 illustrated in FIG. 2.

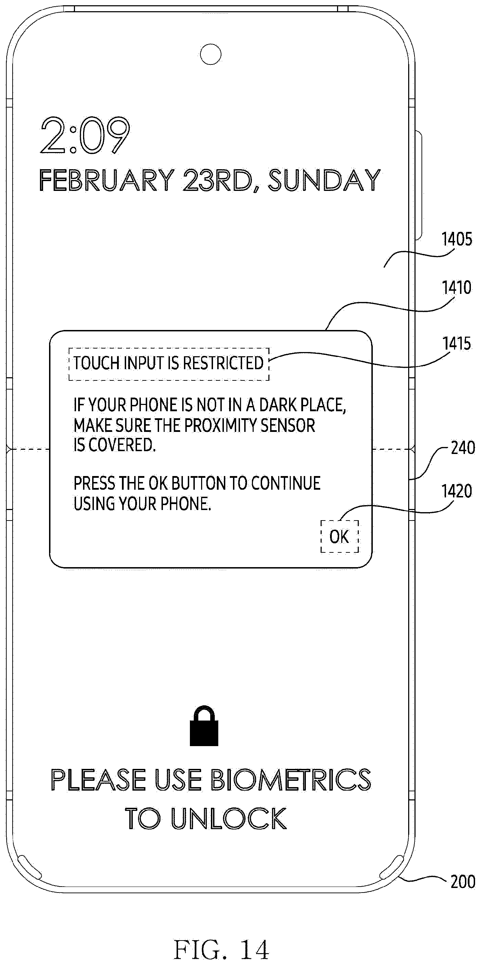

FIG. 14 illustrates an example of a screen including a visual object displayed based on identifying that an electronic device is included in an external object in an ungripped state, according to an embodiment.

Referring to FIG. 13, in operation 1302, the processor 210 may detect an event for enabling the first display 240. For example, the event may include at least one of receiving a signal or message from an external electronic device, receiving an input on a physical button exposed through a housing of the electronic device 200, changing a posture of the electronic device 200, or receiving a specified touch input through the first display 240 of the electronic device 200. However, it is not limited thereto.

In operation 1304, in response to detecting the event, the processor 210 may obtain data indicating a state around the electronic device 200 through the second sensor 280. For example, the processor 210 may obtain the data through the second sensor 280 exposed toward the outside in response to detecting the event. For example, operations illustrated in FIG. 13 may be executed on a condition that the second sensor 280 is exposed toward the outside. For example, the electronic device 200 performing operations illustrated in FIG. 13 may be a bar type electronic device or a foldable electronic device in the unfolding state such as the state 400 illustrated in FIG. 4. For another example, the electronic device 200 performing operations illustrated in FIG. 13 may be an electronic device that does not include the second display 250. However, it is not limited thereto. In an embodiment, obtaining of the data may be ceased in response to enabling the first display 240 according to the event. In an embodiment, obtaining of the data may be ceased before enabling the first display 240 according to the event. However, it is not limited thereto.

In operation 1306, the processor 210 may identify whether the data is within a first reference range. For example, the processor 210 may set or configure the first reference range based on first values obtained through the second sensor 280 before obtaining the data in operation 1304. For example, the number of the first values within the first reference range may be greater than or equal to a specified number, in order to secure the reliability of identification of a state of the electronic device 200 executed based on the first reference range. For example, each of the first values within the first reference range may be a value estimated to be obtained through the second sensor 280 when a state of the electronic device 200 is in the first state. In an embodiment, the processor 210 may execute operation 1308 on a condition that the data is within the first reference range, otherwise execute operation 1310.

In operation 1308, the processor 210 may identify that the electronic device 200 is within the first state, based on identifying that the data is within the first reference range. For example, the processor 210 may display a first screen through the first display 240 enabled according to the event detected in operation 1302, based on identifying that the electronic device 200 is in the first state. For example, since the electronic device 200 being in the first state may mean that the electronic device 200 is within a state in which the electronic device 200 may not receive a user input, the first screen may include a visual object for guiding that a touch input on the first display 240 is restricted. For example, referring to FIG. 14, the processor 210 may display a visual object 1410 including text 1415 guiding that the touch input is restricted, as superimposed on a lock screen 1405 of the electronic device 200. In an embodiment, the lock screen 1405 displayed under the visual object 1410 may be replaced with a screen displayed while providing the AOD mode. In an embodiment, the visual object 1410 may further include an executable object 1420 for ceasing the display of the visual object 1410. However, it is not limited thereto.

In operation 1310, the processor 210 may identify whether the data is within a second reference range based on identifying that the data is out of the first reference range. For example, the processor 210 may set or configure the second reference range, based on second values obtained through the second sensor 280 before obtaining the data in operation 1304. For example, the number of the second values within the second reference range may be greater than or equal to a specified number, in order to secure the reliability of identification of a state of the electronic device 200 executed based on the second reference range. For example, each of the second values within the second reference range may be a value estimated to be obtained through the second sensor 280 when the state of the electronic device 200 is in the second state. In an embodiment, the processor 210 may execute operation 1312 on a condition that the data is within the second reference range, otherwise execute operation 1314.

In operation 1312, the processor 210 may identify that the electronic device 200 is within the second state, based on identifying that the data is within the second reference range. For example, the processor 210 may display a second screen through the first display 240 enabled according to the event detected in operation 1302, based on identifying that the electronic device 200 is within the second state. For example, the second screen may be a screen that does not include the visual object for guiding that the touch input on the first display 240 is restricted. For example, the second screen may include a lock screen that does not include the visual object, a home screen that does not include the visual object, or a screen provided in the AOD mode that does not include the visual object. However, it is not limited thereto.

In operation 1314, based on identifying that the data is out of the first reference range and the second reference range, the processor 210 may identify first difference between a representative value of the first values within the first reference range and the data obtained in operation 1304, and second difference between a representative value of the second values within the second reference range and the data obtained in operation 1304. For example, when a state of the electronic device 200 may not be identified using the first reference range and the second reference range set based on values (e.g., the first values and the second values) obtained through the second sensor 280 before the data is obtained, the processor 210 may identify the first difference and the second difference.

In operation 1316, the processor 210 may identify whether the electronic device 200 is in the first state or the second state based on the first difference and the second difference. For example, the processor 210 may identify that the electronic device 200 is within the first state on a condition that the first difference is greater than or equal to the second difference, and may otherwise identify that the electronic device 200 is within the second state. The processor 210 may display the first screen based on identifying that the electronic device 200 is within the first state, and display the second screen based on identifying that the electronic device 200 is within the second state.

As described above, the electronic device 200 may identify a state of the electronic device 200, by using the first reference range and the second reference range set based on values obtained before obtaining the data in operation 1304. Unlike an electronic device identifying the first state or the second state with a fixed criterion, since the electronic device 200 identifies the first state or the second state based on the first reference range and the second reference range set based on values previously obtained through the second sensor 280, the electronic device 200 may perform the identification that is robust to a change in a state of the second sensor 280, a change in a state of the electronic device 200 related to the second sensor 280, and a change in an external environment related to the second sensor 280.

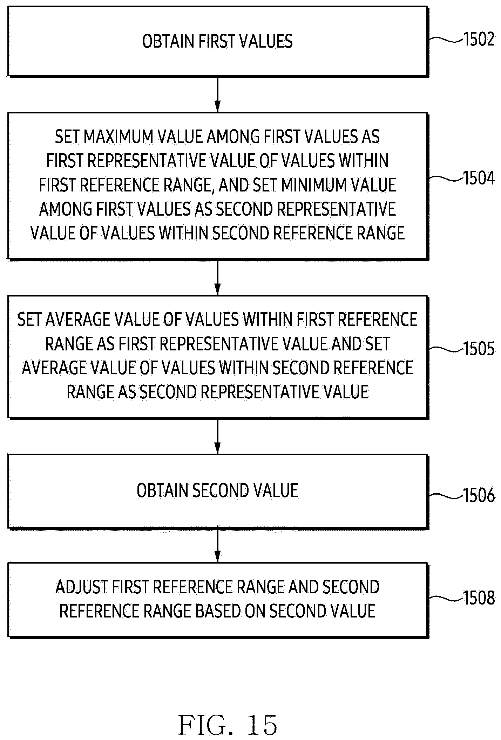

FIG. 15 is a flowchart illustrating a method of adjusting a first reference range and a second reference range, according to an embodiment. This method may be executed by the electronic device 101 illustrated in FIG. 1, the processor 120 illustrated in FIG. 1, the electronic device 200 illustrated in FIG. 2, or the processor 210 illustrated in FIG. 2.

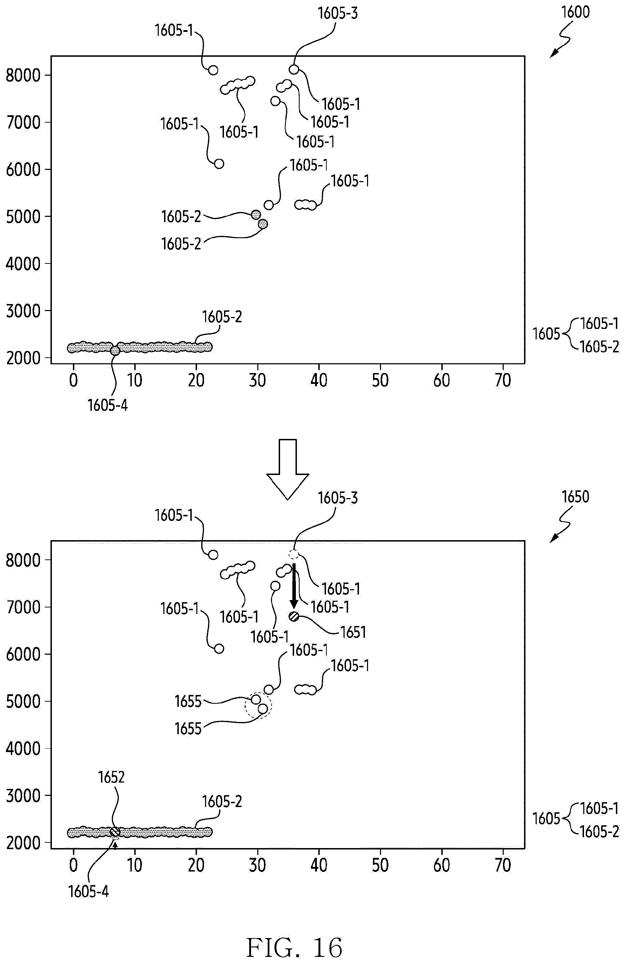

FIG. 16 illustrates an example of a method of adjusting a representative value of first values within a first reference range and a representative value of second values within a second reference range, according to an embodiment.

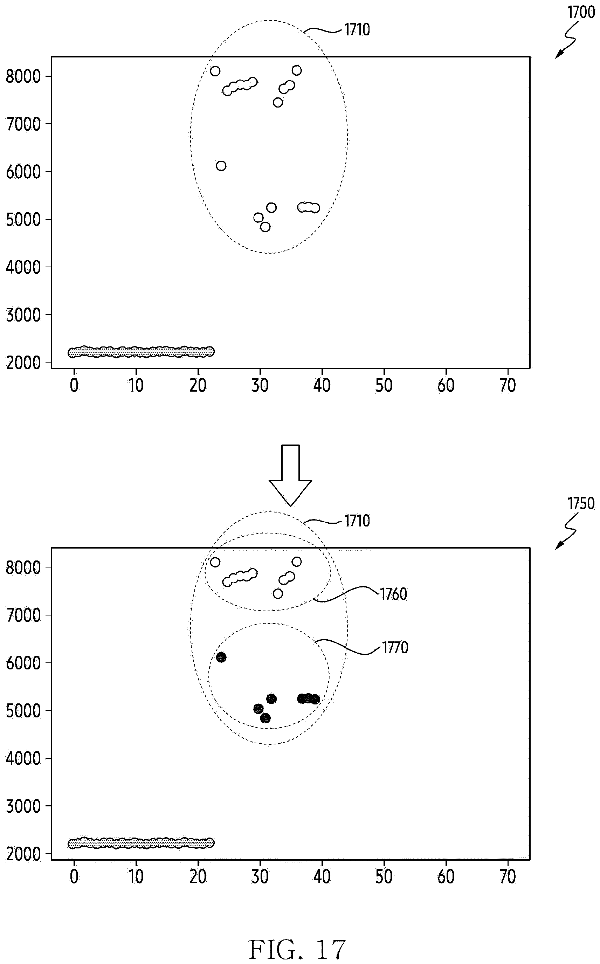

FIG. 17 illustrates an example of a method of dividing a first reference range into a first partial reference range and a second partial reference range, according to an embodiment.

Referring to FIG. 15, in operation 1502, the processor 210 may obtain first values indicating a state around the electronic device 200 through the second sensor 280. For example, the processor 210 may obtain the first values through the second sensor 280 before (or immediately before) the first display 240 is enabled. The first values may be stored in a buffer related to the second sensor 280 or the first processor 220.

In operation 1504, based on identifying that the number of the first values obtained through the second sensor 280 in operation 1502 reaches a specified number, the processor 210 may set a maximum value among the first values as a first representative value among values within a first reference range, and set a minimum value among the first values as a second representative value among values within a second reference range. For example, referring to FIG. 16, the processor 210 may set a maximum value 1605-3 among first values 1605 as the first representative value of values within the first reference range, and set a minimum value 1605-4 among the first values 1605 as the second representative value of values within the second reference range, as shown in graph 1600. The processor 210 may set the first reference range and the second reference range based on the maximum value 1605-3 and the minimum value 1605-4. For example, the first reference range may include values 1605-1 including the maximum value 1605-3, and the second reference range may include values 1605-2 including the minimum value 1605-4. In an embodiment, the first reference range may be referred to as a first cluster in terms of a set of values 1605-1, and the second reference range may be referred to as a second cluster in terms of a set of values 1605-2.

Referring back to FIG. 15, in operation 1505, after setting the first reference range and the second reference range, the processor 210 may set an average value of values within the first reference range as the first representative value and set an average value of values within the second reference range as the second representative value. For example, referring to FIG. 16, the processor 210 may change the first representative value from the maximum value 1605-3 to an average value 1651 of the values 1605-1 and change the second representative value from the minimum value 1605-4 to an average value 1652 of the values 1605-2, as shown in graph 1650. The processor 210 may change the first reference range and the second reference range based on the average value 1651, which is the first representative value, and the average value 1652, which is the second representative value. For example, values 1655 identified as the values 1605-2 within the second reference range in the graph 1600 may be changed to values within the first reference range, by the change of the first reference range and the second reference range.

Referring back to FIG. 15, in operation 1506, the processor 210 may obtain a second value indicating a state around the electronic device 200 through the second sensor 280. For example, the processor 210 may obtain the second value through the second sensor 280 before (or immediately before) the first display 240 is enabled. The second value may be stored in the buffer. A portion of the first values stored in the buffer may be removed from the buffer, by storing the second value in the buffer. However, it is not limited thereto.

In operation 1508, the processor 210 may adjust the first reference range and the second reference range based on the second value. For example, the processor 210 may adjust the first representative value and the second representative value by using the second value, and adjust the first reference range and the second reference range based on the adjusted first representative value and the adjusted second representative value. In an embodiment, the processor 210 may apply a weight to the second value for the adjustment executed based on the second value. For example, the weight may be set differently, according to whether the second value is obtained within a state in which the processor 210 recognizes the context illustrated through the description of FIG. 11. For example, a weight applied to the second value obtained in a first context for providing a call service with an external electronic device through a call application, the second value obtained in a second context for identifying that a posture of the electronic device 200 is different from the specified posture through the first sensor 270, and the second value obtained immediately before a third context in which a user input on the executable object 1420 in the visual object 1410 illustrated in FIG. 14 is received, may be greater or higher than a weight applied to the second value obtained within a state in which a context such as the first context, the second context, and the third context is not recognized. However, it is not limited thereto.

In an embodiment, the processor 210 may divide the first reference range into two or more ranges while executing operation 1508 or based on executing operation 1508. For example, the processor 210 may divide the first reference range into two or more ranges based on distribution of values within the first reference range. For example, since a space of the external object in which the electronic device 200 is included in a ungripped state may vary according to the type of the external object, the processor 210 may divide the first reference range into two or more ranges. For example, referring to FIG. 17, values in an area 1710 within graph 1700 may be values within the first reference range. Based on the distribution of the values within the area 1710, the processor 210 may divide the values within the area 1710 into values within an area 1760 and values within an area 1770, as shown in graph 1750. For example, the processor 210 may identify that the electronic device 200 is included in a pants pocket in the ungripped state on a condition that values obtained through the second sensor 280 after dividing the values in the area 1710 into the values in the area 1760 and the values in the area 1770 are included within the area 1760, and the processor 210 may identify that the electronic device 200 is included in a bag having a larger space than the pants pocket in the ungripped state on a condition that values obtained through the second sensor 280 after dividing the values in the area 1710 into values in the area 1760 and values in the area 1770 are included in the area 1770. However, it is not limited thereto.

As described above, since the electronic device 200 adaptively adjusts the first reference range and the second reference range according to a value obtained through the second sensor 280 and identifies a state of the electronic device 200 based on the adjusted first reference range and the adjusted second reference range, the electronic device 200 may perform the identification that is robust to a change in a state of the second sensor 280, a change in a state of the electronic device 200 related to the second sensor 280, and a change in an external environment related to the second sensor 280.

As described above, an electronic device may comprise a first housing including a first surface and a second surface facing the first surface, a second housing including a third surface and a fourth surface facing the third surface, a folding housing pivotably connecting a side surface of the first housing to a side surface of the second housing that faces the side surface of the first housing, at least one inertial sensor within at least one of the first housing or the second housing, a first display disposed on the first surface and the third surface across the folding housing, a second display disposed on the second surface or the fourth surface, and at least one processor. According to an embodiment, the at least one processor may be configured to, while the second display is disabled in a folding state in which the first surface faces the third surface, obtain, through the at least one inertial sensor, first data indicating a posture of the electronic device and second data indicating a movement state of the electronic device. According to an embodiment, the at least one processor may be configured to change, based on a reception of a touch input on the enabled second display, a time duration in which the second display is enabled in accordance with the specified event, based on detecting, while identifying the electronic device being moved in a specified posture based on the first data and the second data, a specified event. According to an embodiment, the at least one processor may be configured to maintain, independently from the reception of the touch input, the time duration, based on detecting, while identifying the electronic device being moved in a posture different from the specified posture based on the first data and the second data, the specified event.

According to an embodiment, the at least one processor may be configured to change, based on a reception of the touch input, the time duration, based on detecting, while identifying that a position of the electronic device that has the specified posture is maintained based on the first data and the second data, the specified event. According to an embodiment, the at least one processor may be configured to change, based on a reception of the touch input, the time duration, based on detecting, while identifying that a position of the electronic device that has the posture different from the specified posture based on the first data and the second data, the specified event.

According to an embodiment, the at least one processor may be configured to, while the second display is disabled, identify difference in length of vectors obtained through the at least one inertial sensor. According to an embodiment, the at least one processor may be configured to obtain the first data, based on identifying the difference in length being within a specified range. For example, the at least one processor may be configured to obtain the first data, based on identifying that the number of the vectors whose the difference in length is within the specified range reaches a specified number. For example, the at least one processor may be configured to identify a relation between each of an x-axis component, a y-axis component, and a z-axis component of each of the vectors and an acceleration of gravity, based on identifying that the number reaches of the specified number. For example, the first data may indicate the relation.

According to an embodiment, the electronic device may comprise a proximity sensor included in the first display or disposed under the first display. According to an embodiment, the at least one processor may be configured to, while the second display is disabled in the folding state, identify, through the at least one inertial sensor among the at least one inertial sensor and the proximity sensor, whether the electronic device is in a first state in which the electronic device is included in an external object in a ungripped state or is in a second state different from the first state. According to an embodiment, the at least one processor may be configured to, while the electronic device is in an unfolding state in which the first surface and the third surface forms one flat surface, identify, through the proximity sensor among the at least one inertial sensor and the proximity sensor, whether the electronic device is in the first state or is in the second state. According to an embodiment, the first data and the second data may be obtained to identify whether the electronic device is in the first state or is in the second state. According to an embodiment, the at least one processor may be configured to identify the electronic device being in the first state, based on identifying the electronic device being moved in the specified posture based on the first data and the second data. According to an embodiment, the at least one processor may be configured to identify the electronic device being in the second state, based on identifying the electronic device being moved in the posture different from the specified posture based on the first data and the second data. For example, the at least one processor may be configured to obtain third data for indicating a state around the electronic device through the proximity sensor, based on identifying another specified event for enabling the first display while the electronic device is in the unfolding state. For example, the at least one processor may be configured to identify whether the electronic device is in the first state or is in the second state based on the third data. For example, the at least one processor may be configured to enable the first display after obtaining the third data. For example, the at least one processor may be configured to cease to obtain the third data, after enabling the first display. For example, the at least one processor may be configured to identify first difference between the third data and first reference data indicating the first state and second difference between the third data and second reference data indicating the second state. For example, the at least one processor may be configured to identify whether the electronic device is in the first state or is in the second state, based on the first difference and the second difference. For example, the at least one processor may be configured to, while providing a call with a user of an external electronic device through a call application, obtain fourth data for indicating a state around the electronic device through the proximity sensor. For example, the at least one processor may be configured to update the first reference data and the second reference data, based on the fourth data. For example, the third data may be data obtained after updating the first reference data and the second reference data based on the fourth data. For example, the at least one processor may be configured to display a visual object for guiding that a reception of a touch input on the first display is restricted, through the first display, based on identifying the electronic device being in the first state based on the third data. For example, the at least one processor may be configured to receive a user input for ceasing the display of the visual object. For example, the at least one processor may be configured to update the first reference data and the second reference data, based on the reception of the user input.

For example, the proximity sensor may be disabled while the second display is disabled in the folding state.

According to an embodiment, the at least one processor may include a first processor operably coupled to the at least one inertial sensor and a second processor operably coupled to the first processor. According to an embodiment, the at least one processor may be configured to disable the second processor. According to an embodiment, the at least one processor may be configured to, while the second display is disabled in the folding state, obtain, through the at least one inertial sensor, the first data and the second data. According to an embodiment, the second processor enabled based on detecting the specified event may be configured to enable the second display. For example, the first processor among the first processor and the second processor may be configured to, while the second processor is disabled and the second display is disabled in the folding state, identify, based on the first data and the second data, the electronic device being moved in the specified posture or being moved in the posture different from the specified posture. The second processor among the first processor and the second processor may be configured to change the time duration based on a reception of the touch input or maintain the time duration independently from the reception of the touch input.

According to an embodiment, the specified event may comprise receiving a specified touch input on the second display, receiving a depression input on a physical button exposed thorough a portion of the first housing or a portion of the second housing, or receiving a message from an external electronic device.

As described above, an electronic device may comprise a display, a proximity sensor included in the display or disposed under the display, and at least one processor. According to an embodiment, the at least one processor may be configured to detect an event for enabling the display, and obtain data indicating a state around the electronic device through the proximity sensor, in response to detecting the event. According to an embodiment, the at least one processor may be configured to identify the electronic device being in a first state in which the electronic device is included in an external object in a ungripped state, based on identifying the data being within a first reference range. According to an embodiment, the at least one processor may be configured to identify the electronic device being in a second state different from the first state, based on identifying the data being within a second reference range different from the first reference range. According to an embodiment, the at least one processor may be configured to identify a first difference between a representative value of first values within the first reference range and the data and a second difference between a representative value of second values within the second reference range and the data, based on identifying that the data is out of the first reference range and the second reference range. According to an embodiment, the at least one processor may be configured to identify whether the electronic device is in the first state or the second state, based on the first difference and the second difference. According to an embodiment, the at least one processor may be configured to display a first screen through the display enabled in accordance with the event, based on identifying that the electronic device is in the first state. According to an embodiment, the at least one processor may be configured to display a second screen through the display enabled in accordance with the event, based on identifying that the electronic device is in the second state.

According to an embodiment, the at least one processor may be configured to cease obtaining the data through the proximity sensor in response to enabling the display. For example, at least one of the first reference range and the second reference range may be adjusted based on the data.

According to an embodiment, the data may be first data. According to an embodiment, the at least one processor may be configured to obtain second data for indicating a state around the electronic device through the proximity sensor, while providing a call with a user of an external electronic device through a call application. According to an embodiment, the at least one processor may be configured to adjust at least one of the first reference range and the second reference range based on the second data. According to an embodiment, a weight applied to the second data for adjusting at least one of the first reference range and the second reference range may be greater than a weight applied to the first data for adjusting at least one of the first reference range and the second reference range.

According to an embodiment, the at least one processor may be configured to display, on the first display, the first screen including a visual object for guiding that a touch input on the first display is restricted, based on identifying that the electronic device is in the first state.

According to an embodiment, the electronic device may include at least one inertial sensor. According to an embodiment, the at least one processor may be configured to obtain data indicating a posture of the electronic device through the at least one inertial sensor. According to an embodiment, the at least one processor may be configured to identify whether the electronic device is in the first state or the second state, based on the data indicating the posture.

As in examples described above, an electronic device may prevent a user from executing unintended operations by identifying whether the electronic device is included in an external obj ect in an ungripped state based on data obtained through an inertial sensor.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing including a first surface and a second surface facing the first surface;
a second housing including a third surface and a fourth surface facing the third surface;
a folding housing rotatably connecting a side surface of the first housing to a side surface of the second housing that faces the side surface of the first housing, based on a folding axis;
at least one inertial sensor in the first housing and/or the second housing;
a first display disposed on the first surface and the third surface across the folding housing;
a second display disposed on the second surface or the fourth surface; and
at least one processor configured to:
while the second display is disabled in a folding state in which the first surface faces the third surface, obtain, through the at least one inertial sensor, first data indicating a posture of the electronic device and second data indicating a movement state of the electronic device;
based on detecting, while identifying the electronic device being moved in a specified posture based on the first data and the second data, a specified event:
change, based on a reception of a touch input on the enabled second display, a time duration in which the second display is enabled in accordance with the specified event; and
based on detecting the specified event:
while identifying the electronic device being moved in a posture different from the specified posture based on the first data and the second data, maintain, independently from a reception of the touch input, the time duration.

2. The electronic device of claim 1, wherein the at least one processor is further configured to:
based on detecting, while identifying that a position of the electronic device that has the specified posture is maintained based on the first data and the second data, the specified event:
change, based on a reception of the touch input, the time duration; and
based on detecting, while identifying that a position of the electronic device that has the posture different from the specified posture based on the first data and the second data, the specified event, change, based on a reception of the touch input, the time duration.

3. The electronic device of claim 1, wherein the at least one processor is configured to:
while the second display is disabled, identify difference in length of vectors obtained through the at least one inertial sensor; and
based on identifying the difference in length being within a specified range, obtain the first data.

4. The electronic device of claim 3, wherein the at least one processor is configured to:
based on identifying that a number of the vectors whose the difference in length is within the specified range reaches a specified number, obtain the first data.

5. The electronic device of claim 4, wherein the at least one processor is configured to:
based on identifying that the number reaches of the specified number, identify a relation between each of an x-axis component, a y-axis component, and a z-axis component of each of the vectors and an acceleration of gravity, and
wherein the first data indicates the relation.

6. The electronic device of claim 1, further comprising:
a proximity sensor included in the first display or disposed under the first display,
wherein the at least one processor is further configured to:
while the second display is disabled in the folding state, identify, through the at least one inertial sensor among the at least one inertial sensor and the proximity sensor, whether the electronic device is in a first state in which the electronic device is included in an external object in a ungripped state or is in a second state different from the first state; and
while the electronic device is in an unfolding state in which the first surface and the third surface forms one flat surface, identify, through the proximity sensor among the at least one inertial sensor and the proximity sensor, whether the electronic device is in the first state or is in the second state,
wherein the first data and the second data are obtained to identify whether the electronic device is in the first state or is in the second state, and
wherein the at least one processor is configured to:
based on identifying the electronic device being moved in the specified posture based on the first data and the second data, identify the electronic device being in the first state; and
based on identifying the electronic device being moved in the posture different from the specified posture based on the first data and the second data, identify the electronic device being in the second state.

7. The electronic device of claim 6, wherein the at least one processor is configured to:
based on identifying another specified event for enabling the first display while the electronic device is in the unfolding state, obtain third data for indicating a state around the electronic device through the proximity sensor;
identify whether the electronic device is in the first state or is in the second state based on the third data;
after obtaining the third data, enable the first display; and
after enabling the first display, cease to obtain the third data.

8. The electronic device of claim 7, wherein the at least one processor is configured to:
identify first difference between the third data and first reference data indicating the first state and second difference between the third data and second reference data indicating the second state; and
based on the first difference and the second difference, identify whether the electronic device is in the first state or is in the second state.

9. The electronic device of claim 8, wherein the at least one processor is further configured to:
while providing a call with a user of an external electronic device through a call application, obtain fourth data for indicating a state around the electronic device through the proximity sensor; and
based on the fourth data, update the first reference data and the second reference data, and
wherein the third data is data obtained after updating the first reference data and the second reference data based on the fourth data.

10. The electronic device of claim 8, wherein the at least one processor is further configured to:
based on identifying the electronic device being in the first state based on the third data, display a visual object for guiding that a reception of a touch input on the first display is restricted, through the first display;
receive a user input for ceasing the display of the visual object; and
based on the reception of the user input, update the first reference data and the second reference data.

11. The electronic device of claim 6, wherein the proximity sensor is disabled while the second display is disabled in the folding state.

12. The electronic device of claim 1, wherein the at least one processor includes a first processor operably coupled to the at least one inertial sensor and a second processor operably coupled to the first processor,
wherein the first processor is configured to:
while the second processor is disabled and the second display is disabled in the folding state, obtain, through the at least one inertial sensor, the first data and the second data, and
wherein the second processor enabled based on detecting the specified event is configured to enable the second display.

13. The electronic device of claim 12, wherein the first processor among the first processor and the second processor is configured to:
while the second processor is disabled and the second display is disabled in the folding state, identify, based on the first data and the second data, the electronic device being moved in the specified posture or being moved in the posture different from the specified posture, and
wherein the second processor among the first processor and the second processor is configured to:
change the time duration based on a reception of the touch input or maintain the time duration independently from a reception of the touch input.

14. The electronic device of claim 1, wherein the specified event comprises:
receiving a specified touch input on the second display;
receiving a depression input on a physical button exposed thorough a portion of the first housing or a portion of the second housing; or
receiving a message from an external electronic device.

15. A method executed in an electronic device that comprises a first housing including a first surface and a second surface facing the first surface, a second housing including a third surface and a fourth surface facing the third surface, a folding housing rotatably connecting a side surface of the first housing to a side surface of the second housing that faces the side surface of the first housing, at least one inertial sensor in the first housing and/or the second housing, a first display disposed on the first surface and the third surface across the folding housing, and a second display disposed on the second surface or the fourth surface, the method comprising:
while the second display is disabled in a folding state in which the first surface faces the third surface, obtaining, through the at least one inertial sensor, first data indicating a posture of the electronic device and second data indicating a movement state of the electronic device;
based on detecting, while identifying the electronic device being moved in a specified posture based on the first data and the second data, a specified event:
changing, based on a reception of a touch input on the enabled second display, a time duration in which the second display is enabled in accordance with the specified event; and
based on detecting the specified event:
while identifying the electronic device being moved in a posture different from the specified posture based on the first data and the second data, maintaining, independently from a reception of the touch input, the time duration.
